# EUROPEAN PATENT SPECIFICATION

(11) **EP 2 523 550 B1**
(45) Date of publication and mention of the grant of the patent: **09.09.2015**
(21) Application number: 11733143.9
(22) Date of filing: 12.01.2011
(51) Int. Cl.: A01K 91/08, A01K 95/02

(54) **COUPLING MEANS FOR A SINKER OR WEIGHT**
KOPPLUNGSMITTEL FÜR EIN SENKBLEI ODER EIN GEWICHT
MOYEN DE COUPLAGE POUR UN PLOMB OU UN POIDS

(30) Priority: 12.01.2010 SE 1000025
(43) Date of publication of application: 21.11.2012
(73) Proprietor: Koch-Schmidt, Per, 392 32 Kalmar (SE)
(72) Inventor: Koch-Schmidt, Per, 392 32 Kalmar (SE)
(74) Representative: Estreen, Lars J.F.
(86) International application number: PCT/SE2011/000002
(87) International publication number: WO 2011/087427

(56) References cited:
- US-A- 2 247 583
- US-A- 3 861 074
- US-A- 4 567 687
- US-A- 4 879 834
- US-A- 5 339 561
- US-A- 5 608 985

## Description

The present invention refers to a coupling means attached to a sinker or a weight intended to be hooked onto a fishing line. This coupling means basically comprises a first tube structure that is movable over an open loop. When the tube structure is moved along the fishing line a gap opens up in the loop whereby the coupling means can be hooked onto the fishing line. Further movement of the first tube structure closes the loop and makes the fishing line to be clamped by the coupling means, thus the coupling means becomes fixed onto the fishing line. The fishing line is tensioned when a fish bites at the same time as a holding means is displaced and looses the fishing line, whereby the weight moves along the fishing line towards the bait in the loop so that it can be released and thereafter be fastened by one hand.

Structures of this type known on the market are used for fishing and foremost when you are trolling baits after a boat in movement, but can also be used when angling. Problems arise when a person is fishing with a permanent fixed weight to said fishing line close to a bait, since it disturbs the movement of the bait in the water or frightens reserved fishes from grabbing the bait. During trolling it is also a problem having a permanent fixed weight to the fishing line when a bait shall be placed just outside along a boat, since one always is trying to avoid that a sinking bait shall hooked to other lines and wires extending downwards into the water behind the boat when you are trolling. Hence, the location of fishing line is done from the boat the first 10-20 meters without a weight. The weight is then permanently fixed onto the fishing line before the bait is located with a chosen distance from the boat or is located in a surface side planar. Present solutions used for weight or pull down baits on the fishing line are shown according to the documents US4567686, US5339561A, US2247583A and US5608985A. These structures might be more complicated to use and cannot easily be attached or deattached to the fishing line during fishing. All the time they are also fixed to the fishing line during fishing and trolling. According to the documents US4567686, US5369561A and US2247583 directional diving devices are illustrated and where suited have a solitary use at each side of the boat. In contrast, document US5608985A belongs to the same category of gripping and releasing device as the present invention and can be used to sink baits, which are for instance directed by surface side planers, of which four simultaneously can be pulled along each side of the boat. In US2247583A it is described how one must use two hands to connect the weight to a fishing line at the same time as the fishing rod must be laid aside. The structure according to the document US5608985A, comprises one loop and one gripping device. The fishing line is fixed in the holding means at a distance from the loop, through which the fishing line runs freely. The holding means consists of two washers that are pressed together by a spring with an uncertain force and therefore the fishing line can get loose from there without catching a fish which is a large problem. Furthermore, this structure shows several points where a fishing line might catch up and tangle during fishing, which is something that might make this device difficult to use in reality. The above mentioned directional diving devices does not work with side planers, or when angling.

US4879834 discloses a depth planer and release for sliding down fishing line with a lead weight. The object of the present invention is to eliminate the drawbacks that might occur when using the structures mentioned above by that the coupling means comprises a holding means having a loop formation provided with a weight over which a first tube structure is movable, so that the fishing line can be clamped against the loop formation. When line tension arises this first tube structure is pressed back and displaced so that the coupling means runs freely along the fishing line. To detach the coupling means the first tube structure is moved further by one hand so that an opening is exposed in the loop formation.

Thanks to the invention a coupling means as defined in claim 1 has now been provided, which can be attached to a fishing line, which is made up by a very simple structure where a weight easily can be attached. The coupling means comprises a loop having a holding means which is provided at the weight. During fishing the weight is provided fixed to the fishing line in a distance from a bait by aid of the holding means. When line tension increases to a certain point between the rod and lure, such as when a fish is retrieved towards the boat, the tension makes the tube structure to be displaced so that the fishing line runs freely through the loop formation of the coupling means. Hence, the coupling means, with its attached weight slides thereafter towards the bait. According to the invention the loop formation includes a first tube structure which enclose the same and is movable onto and/or over the loop, either towards and over or away from the loop. The first tube structure can be made up by a flexible material such as a piece of silicone tubing that is movable over the loop with a certain force of friction, so that the inner walls of the tubing can press the fishing line against a chosen part of the loop formation. The loop shows an opening which is exposed when the first tube structure is pulled back so that the coupling means easily can be hooked onto a fishing line. This occurs when the first tube structure has been pulled past the opening, so that the same opens. To close the coupling devise the first tube structure is moved over and past the gap of the loop formation. Further movement of the first tube structure over the loop makes the line to be clamped between the inner walls of the first tube structure and the loop formation, which makes up the holding means. When a fish has taken the bait and increases the line tension the first tube structure is forced back by the fishing line so that the line can move freely. The coupling means can now easily slide towards the bait without being taken away from the line. Hence, for instance a weight which is attached to the coupling device need not be detached to be able to land the fish. The form of the coupling means makes that it is then easily to remove with the use of one hand for instance by the thumb and the forefinger to displace the first tube formation until the opening in the loop is exposed, so that the weight is loosened from the fishing line and then when needed any time during the fishing being attached to the fishing line again. In this way the person which is fishing does never need to put away his fishing rod which is hold by aid of the other hand with full control during the fishing procedure.

The invention is described closer below with help of some preferred embodiment examples in view of the drawings enclosed, in which
- Fig. 1: shows a weight attached to the coupling means having an open loop formation before the fasten of a fishing line,
- Fig. 2: shows the weigth fixed to the fishing line,
- Fig. 3: shows a weight with a narrower portion, which constitutes a part of the holding means, and
- Fig. 4: shows the attachment of a smaller loop formation towards the weight.

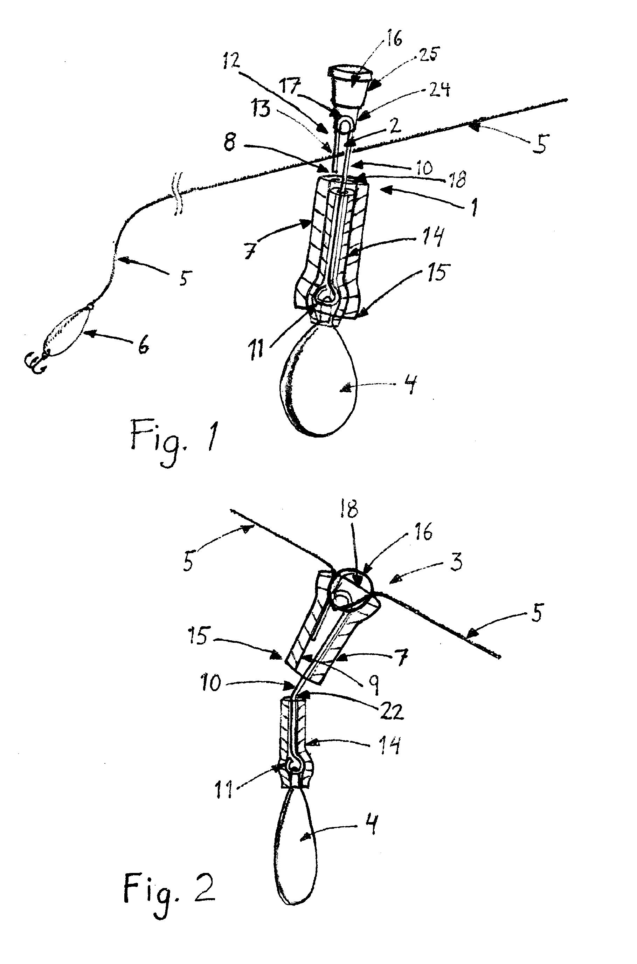

As is illustrated in Fig. 1 a coupling means 1 comprises a loop formation 2, made out of a wire 10 or the like, which is connected to a weight 4. The loop formation has an opening 8, in which a fishing line 5 can be inserted in order to be clamped. A first tube structure 7 is located close to the weight 4 at the same time as the whole opening 8 is open and encloses a portion of the loop formation 2 for fastening of the weight 4 to the fishing line 5.

As is illustrated in Fig 2 the fishing line 5 is here enclosed by the loop formation 2. The wire 10 has been drawn into the first tube structure 7 when the same has been moved upwards over said loop formation 2 and the opening 8 away from the weight 4. The loop formation 2 consists of a body 16, which fasten the fishing line 5 against the inner wall 9 of the first tube structure 7in order to constitute a holding means 3, when there is a bite, the fishing line 5 is tensioned and gets stretched and in this way is urging the first tube structure 7 to be displaced in a direction towards the weight 4. The fishing line 5 is then able to move freely inside the loop formation 2. The wire 10 in this example might be 1-2 mm in diameter and is extending preferable about 40-60 mm in a direction towards the body16.

As is illustrated in Fig. 1 and 2 the wire 10 comprises a hook formation 13 which is somewhat stiff and having a spring back function and which is made of metal, stainless steel spring steel or a composite plastic and which is intended to hook around the fishing line 5 through the opening 8. The wire 10 has a first end 11, which is attached to the weight 4. The hook formation 13 is positioned at the second end 12 of the wire 10, which also is at the end of the hook formation 13, viewed in a direction away from the weight 4 and which comprises the body 16. The hook formation 13 is formed like an "U", the upper part of which is pointing in a direction towards the weight 4. The "U" consists of two legs, where one is longer than the other. The longer leg constitutes a part of the first end 11, which is connected to the weight 4. The shorter of the two legs ends at a distance from the weight 4. Said distance then constitutes a part of the maximum size of the opening 8.

The lower bend 17 of the "U" represents the second end 12. The longer leg is enclosed by a second tube structure 14, the outer diameter of which is slightly smaller or mainly equal to the inner diameter of the first tube structure 7 in order to constitute a friction against the inner wall 9, which prevents a displacement during the move of the first tube formation 7 downwards over the loop formation 2 in order to fix the first tube formation 7 into position. The body 16 is fixed to the lower bend 17 of the "U" made up by the wire 10. According to another version of the invention the body 16 is made out of a rubber-like material formed into a bulb-like shape, which has the ability to penetrate the first opening 18 of the first tube structure 7 in a way so that the body 16 is enclosed by the first tube formation 7 in a direction away from the weight 4. This makes the fishing line 5 to be pulled inside the first tube formation 7 and clamped between the inner wall 9 of the first tube structure 7 and the body 16. According to a further version of the invention the body 16 is shaped like a cone, which consists of one slender section 24 and one thicker section 25, where the slender section 24 is facing the first opening 18 at the other end 12. The more the body 16 is pushed into the first opening 18 of the first tube structure 7, the more tension on the fishing line 5 requires to displace the first tube structure 7 back. In reality this means that a person using this device is able to adjust the holding power of the coupling means 1 on the fishing line 5, just by regulating the distance that the body 16 pushes the fishing line 5 into the first tube structure 7.

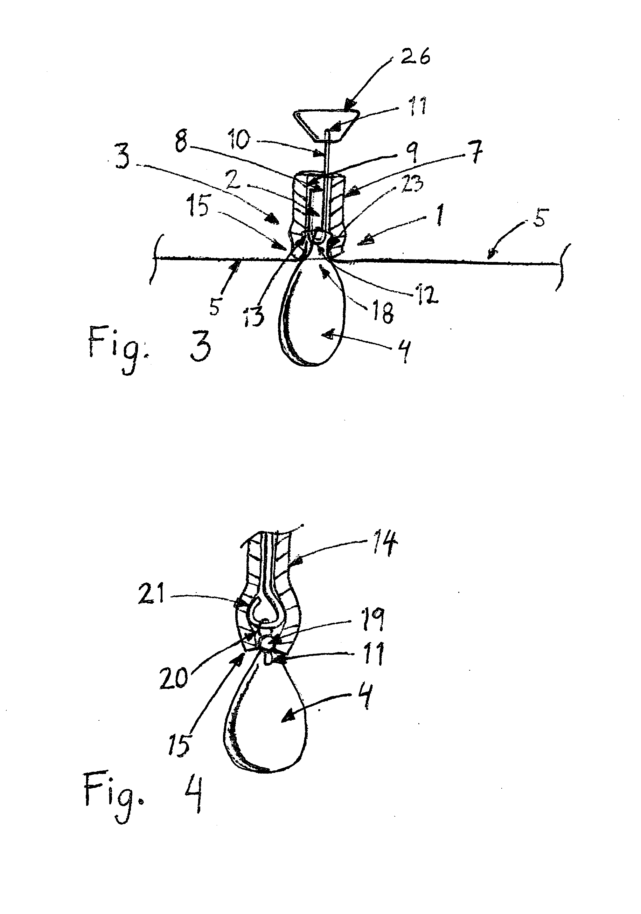

As can be seen from Fig. 3 here is illustrated a third version of the invention, in which the weight 4 has a cylinder shaped formation 23, which corresponds to the body 16 in the examples mentioned earlier. This implies that in this version the first tube structure 7 is now pulled away from the weight 4 to expose up the opening 8, in which the fishing line 5 is placed. To clamp the fishing line 5 the second opening 15 of the first tube structure 7 is pushed with a certain friction onto the cylinder shaped formation 23. The cylinder shaped slender formation 23 is thereafter inserted into the lower second opening 15 of the first tube structure 7 which is situated near the second end 12, which in this case encloses the cylinder shaped slender formation 23, which here constitutes the thinner portion of the weight 4 and which presses in the fishing line 5 into the first tube structure 7 and in that place presses the same against the inner wall 9 corresponding to the body 16 mentioned above in order to constitute said holding means 3. Here is according to Fig.3 also illustrated a friction- or stop body 26 intended to serve as a stop for the first tube structure 7, so that the same does not slip off the coupling means 1.

As is illustrated in Fig 4 the connection to the weight 4 consists of a joint 19, which creates a flexible movement of the weight 4 through the fishing water , for example after a boat, in avoiding that the weight starts to roll or steer when pulled through the water. The movable joint 19 comprises a smaller loop 20, which is coupled to a hook formation 21 in the first end 11 and is then enclosed by the second tube structure 14, which can easily be pulled off the hook formation 21 to change the type of weight 4 depending on which depth during the fishing the weight shall be moved forwards in the water.

As shown in Fig. 2 the wire 10 comprises a bend 22 at a certain distance from the weight 4, which may correspond to the length of the second tube structure 14. The bend 22 here corresponds to the function of the cylinder shaped slender formation 23 as is illustrated in Fig. 3 the friction body 26, shown by fig 3. When the first tube structure 7 is displaced further down past the loop formation 2 towards the weight 4 the first tube structure 7 is exposed to friction against the bend 22 causing it to stop. When the first tube structure 7 thereafter is, by hand, moved further the opening 8 is exposed as a confirmation to the fisherman that the loop formation 2 is broken up thus making it possible to hook the coupling means 1 with its attached weight 4 onto the fishing line 5.

## Claims

1. A coupling means (1) comprising a holding means (3) with at least one loop formation (2), attached to a weight (4), which, when fishing, clamps on to a fishing line (5) in a distance from a bait (6) by the holding means (3), said fishing line (5) being tensioned from both directions of the weight (4), such that when
a fish hooks onto the bait (6) at the same time the holding means (3) is released from the fishing line (5) and the weight (4) slides along the fishing line (5) in the loop formation (2) towards the bait (6), whereby the holding means (3) comprises said loop formation (2), which is enclosable by a first tube structure (7), which when displaced exposes an opening (8) in the loop formation (2) for inserting the fishing line (5) into the loop formation (2), whereby during further displacing of the first tube structure (7) the fishing line (5) is drawn in a distance into it by the loop formation (2) where the fishing line (5) is clamped directly or indirectly between the loop formation (7) and the inner wall (9) of the first tube structure (7), so that
when a fish has taken the bait (6) and the fishing line (5) is tensioned and urges the first tube formation (7) to move and release the fishing line (5) in order to be moved freely in the loop formation (2) at the same time as the weight (4) is releasable from the fishing line (5) when the first tube structure (7) is moved further past the opening (8).

2. A coupling means according to claim 1, **characterized in that** the loop formation (2) consists of mainly a stiff wire (10), which comprises a hook formation (13) for catching the fishing line (5) via the opening (8), said loop formation (2) has a first end (11) at the connection site for the weight (4) and that the hook formation (13) is located at the second end (12) of the wire (10), said hook formation (13) comprises at least one body (16) formed to slide with a predetermined friction against the inner wall (9) when the first tube structure (7) is pulled over the loop formation (2) to clamp the fishing line (5) against the inner wall (9).

3. A coupling means according to claim 2, **characterized in that** the second end (12) at the hook formation (13) is formed like an "U", where the upper part of the "U" formation is turned in a direction towards the weight (4), one leg of the "U" is longer than the other, said longer leg constitutes a part of the first end (11), which is connected to the weight (4) and the other leg of which ends in a predetermined distance from the weight (4), said distance constitutes the maximum size of the opening (8), said "U" comprises a bottom or lower bend (17), which constitutes the second end (12) where the body (16) is positioned.

4. A coupling means according to claim 3, **characterized in that** the longer leg is enclosed by a second tube structure (14), the external diameter of which is slightly less or mainly equal to the inner diameter of the first tube structure (7) to achieve friction against the inner wall (9), which hinders the movement of the first tube structure (7) over the loop formation (2) in a direction downwards to the weight (4) in order to fix the first tube structure (7) in position.

5. A coupling means according to claim 4, **characterized in that** the lower end (17) the "U" comprises the body (16), the extent of which to at least some portion penetrates into the first opening (18) of the first tube structure (7) at the second end (12) and closes the same during the movement of the first tube structure (7) in a direction away from the weight (4) over the second end (12), so that the body (16) brings the fishing line (5) into the first tube structure (7) to be clamped against the inner wall (9) to create said holding means (3).

6. A coupling means according to claim 5, **characterized in that** the body (16) has a cone shaped design with one cylinder shaped slender section (24) and a cylinder shaped thicker section (25), said cylinder formed slender section (24) is turned closer to the first opening (18) at the other end (12), said body (16) the longer it is drawn into the first opening (18) by the fishing line (5) the more pressure it causes against the same and the more rigid it is clamped between the body (16) and the inner wall (9).

7. A coupling means according to claim 6, **characterized in that** the connection of the first end (11) to the weight (4) is made up via a turnable, movable joint (19).

8. A coupling means according to claim 7, **characterized in that** the joint (19) comprises a smaller loop (20) and that the first end (11) has a hook formation (21), which is connectable to the smaller loop (20) and is thereafter enclosed by the second tube structure (14).

9. A coupling means according to claim 8, **characterized in that** the wire (10) has a bend (22) at a predetermined position when the first tube (7) is pushed downwards towards the loop formation (2) towards the weight (4) during the exposure of the opening (8) at the same time as the first tube structure (7) is exposed for friction against the inner wall (9) by the bend (22) and the same when further moved slidingly with friction, so that the opening (8) is exposed for the attachment of the weight (4) onto the fishing line (5).

## Patentansprüche

1. Kupplungsmittel (1), das ein Haltemittel (3) mit mindestens einer Schleifenausbildung (2) umfasst, das an einem Gewicht (4) befestigt ist, das beim Fischen auf eine Angelschnur (5) in einer Entfernung von einem Köder (6) durch das Haltemittel (3) geklemmt wird, wobei die Angelschnur (5) von beiden Richtungen des Gewichts (4) gespannt wird, so dass, wenn sich ein Fisch an dem Köder (6) verhakt, die Haltemittel (3) gleichzeitig von der Angelschnur (5) freigegeben werden und das Gewicht (4) entlang der Angelschnur (5) in die Schleifenausbildung (2) zu dem Köder (6) gleitet, wobei das Haltemittel (3) die Schleifenausbildung (2) umfasst, die durch eine erste Röhrenstruktur (7) umschlossen werden kann, die, wenn sie verlagert wird, eine Öffnung (8) in der Schleifenausbildung (2) zum Einfügen der Angelschnur (5) in die Schleifenausbildung (2) freigelegt, wodurch während weiterer Verlagerung der ersten Röhrenstruktur (7) die Angelschnur (5) von der Schleifenausbildung (2) über eine Entfernung in sie gezogen wird, wo die Angelschnur (5) direkt oder indirekt zwischen der Schleifenausbildung (2) und der Innenwand (9) der ersten Röhrenstruktur (7) geklemmt wird, so dass, wenn ein Fisch den Köder (6) geschluckt hat und die Angelschnur (5) gespannt wird, die erste Röhrenstruktur (7) zum Bewegen und Freigeben der Angelschnur (5) drängt, um frei in der Schleifenausbildung (2) bewegt zu werden, während das Gewicht (4) gleichzeitig von der Angelschnur (5) freigebbar ist, wenn die erste Röhrenstruktur (7) weiter an der Öffnung (8) vorbei bewegt wird.

2. Kupplungsmittel nach Anspruch 1, **dadurch gekennzeichnet, dass** die Schleifenausbildung (2) in der Hauptsache aus steifem Draht (10) besteht, der eine Hakenausbildung (13) zum Fangen der Angelschnur (5) über die Öffnung (8) umfasst, wobei die Schleifenausbildung (2) ein erstes Ende (11) an der Verbindungsstelle für das Gewicht (4) hat, und dass die Hakenausbildung (13) an dem zweiten Ende (12) des Drahts (10) liegt, wobei die Hakenausbildung (13) mindestens einen Körper (16) umfasst, der ausgebildet ist, um mit einer vorbestimmten Reibung gegen die Innenwand (9) zu gleiten, wenn die erste Röhrenstruktur (7) über die Schleifenausbildung (2) gezogen wird, um die Angelschnur (5) gegen die Innenwand (9) zu klemmen.

3. Kupplungsmittel nach Anspruch 2, **dadurch gekennzeichnet, dass** das zweite Ende (12) an der Hakenausbildung (13) wie ein "U" ausgebildet ist, wobei der obere Teil der "U"-Ausbildung in eine Richtung zu dem Gewicht (4) gekehrt ist, ein Schenkel des "U" länger ist als der andere, wobei der längere Schenkel einen Teil des ersten Endes (11) bildet, der mit dem Gewicht (4) verbunden ist, und der andere Schenkel in einer vorbestimmten Entfernung von dem Gewicht (4) endet, wobei die Entfernung eine maximale Größe der Öffnung (8) bildet, wobei das "U" eine Boden- oder untere Biegung (17) umfasst, die das zweite Ende (12) bildet, an dem der Körper (16) positioniert ist.

4. Kupplungsmittel nach Anspruch 3, **dadurch gekennzeichnet, dass** der längere Schenkel von einer zweiten Röhrenstruktur (14) umschlossen ist, deren Außendurchmesser leicht kleiner oder in der Hauptsache gleich dem Innendurchmesser der ersten Röhrenstruktur (7) ist, um Reibung gegen die Innenwand (9) zu erzielen, die die Bewegung der ersten Röhrenstruktur (7) über die Schleifenausbildung (2) in eine Richtung abwärts zu dem Gewicht (4) behindert, um die erste Röhrenstruktur (7) in Position zu fixieren.

5. Kupplungsmittel nach Anspruch 4, **dadurch gekennzeichnet, dass** das untere Ende (17) des "U" den Körper (16) umfasst, dessen Ausmaß zu mindestens einem bestimmten Abschnitt in die erste Öffnung (18) der ersten Röhrenstruktur (7) an dem zweiten Ende (12) eindringt und dieses während der Bewegung der ersten Röhrenstruktur (7) in eine Richtung von dem Gewicht (4) weg über das zweite Ende (12) schließt, so dass der Körper (16) die Angelschnur (5) in die erste Röhrenstruktur (7) bringt, um gegen die Innenwand (9) geklemmt zu werden, um das Haltemittel (3) zu bilden.

6. Kupplungsmittel nach Anspruch 5, **dadurch gekennzeichnet, dass** der Körper (16) ein kegelförmiges Design mit einem zylindrisch geformten schlanken Abschnitt (24) und einem zylindrisch geformten dickeren Abschnitt (25) hat, wobei der zylinderförmige schlanke Abschnitt (24) näher zu der ersten Öffnung (18) an dem anderen Ende (12) gekehrt ist, wobei der Körper (16), je länger er von der Angelschnur (5) in die erste Öffnung (18) gezogen wird, umso mehr Druck gegen diese ausübt und umso steifer zwischen den Körper (16) und die Innenwand (9) geklemmt wird.

7. Kupplungsmittel nach Anspruch 6, **dadurch gekennzeichnet, dass** die Verbindung des ersten Endes (11) mit dem Gewicht (4) aus einem drehbaren beweglichen Gelenk (19) besteht.

8. Kupplungsmittel nach Anspruch 7, **dadurch gekennzeichnet, dass** das Gelenk (19) eine kleinere Schleife (20) umfasst, und dass das erste Ende (11) eine Hakenausbildung (21) hat, die mit der kleineren Schleife (20) verbunden werden kann und danach durch die zweite Röhrenstruktur (14) geschlossen wird.

9. Kupplungsmittel nach Anspruch 8, **dadurch gekennzeichnet, dass** der Draht (10) eine Biegung (22) an einer vorbestimmten Position hat, wenn die erste Röhre (7) abwärts zu der Schleifenausbildung (2) zu dem Gewicht (4) während der Freilegung der Öffnung (8) geschoben wird, während gleichzeitig die erste Röhrenstruktur (7) für Reibung gegen die Innenwand (9) durch die Biegung (22) freigelegt wird und ebenso beim weiteren Bewegen unter Gleiten mit Reibung, so dass die Öffnung (8) für die Befestigung des Gewichts (4) auf der Angelschnur (5) freigelegt ist.

## Revendications

1. Moyen d'accouplement (1) comprenant un moyen de maintien (3) avec au moins une formation de boucle (2), attaché à un poids (4), qui, en pêchant, se serre sur une ligne de pêche (5) à une certaine distance d'un appât (6) par le moyen de maintien (3), ladite ligne de pêche (5) étant tendue à partir des deux sens du poids (4), de sorte que lorsqu'un poisson s'accroche à l'appât (6), au même moment, le moyen de maintien (3) est libéré de la ligne de pêche (5) et le poids (4) coulisse le long de la ligne de pêche (5) dans la formation de boucle (2) vers l'appât (6), de sorte que le moyen de maintien (3) comprend ladite formation de boucle (2), qui peut être entourée par une première structure de tube (7), qui lorsqu'elle est déplacée expose une ouverture (8) dans la formation de boucle (2) pour insérer la ligne de pêche (5) dans la formation de boucle (2), de sorte que pendant un déplacement supplémentaire de la première structure de tube (7) la ligne de pêche (5) est tirée sur une certaine distance dans ce dernier par la formation de boucle (2) où la ligne de pêche (5) est serrée directement ou indirectement entre la formation de boucle (7) et la paroi intérieure (9) de la première structure de tube (7), de sorte que lorsqu'un poisson gobe l'appât (6) et que la ligne de pêche (5) est tendue et pousse la première formation de tube (7) pour déplacer et libérer la ligne de pêche (5) afin d'être déplacée librement dans la formation de boucle (2) en même temps que le poids (4) peut être libéré de la ligne de pêche (5) quand la première structure de tube (7) est déplacée davantage au-delà de l'ouverture (8).

2. Moyen d'accouplement selon la revendication 1, **caractérisé en ce que** la formation de boucle (2) consiste principalement en un fil raide (10), qui comprend une formation de crochet (13) pour attraper la ligne de pêche (5) à travers l'ouverture (8), ladite formation de boucle (2) a une première extrémité (11) au niveau du site de connexion pour le poids (4) et **en ce que** la formation de crochet (13) est située au niveau de la seconde extrémité (12) du fil (10), ladite formation de crochet (13) comprend au moins un corps (16) formé pour coulisser avec une friction prédéterminée contre la paroi intérieure (9) quand on tire la première structure de tube (7) sur la formation de boucle (2) pour serrer la ligne de pêche (5) contre la paroi intérieure (9).

3. Moyen d'accouplement selon la revendication 2, **caractérisé en ce que** la seconde extrémité (12) au niveau de la formation de crochet (13) est formée comme un « U », où la partie supérieure de la formation de « U » est tournée dans un sens vers le poids (4), une jambe du « U » est plus longue que l'autre, ladite jambe plus longue constitue une partie de la première extrémité (11), qui est reliée au poids (4) et dont l'autre jambe aboutit à une distance prédéterminée du poids (4), ladite distance constitue la taille maximale de l'ouverture (8), ledit « U » comprend un fond ou une courbure inférieure (17), qui constitue la seconde extrémité (12) où le corps (16) est positionné.

4. Moyen d'accouplement selon la revendication 3, **caractérisé en ce que** la jambe plus longue est entourée par une seconde structure de tube (14), dont le diamètre externe est légèrement inférieur ou principalement égal au diamètre intérieur de la première structure de tube (7) pour réaliser une friction contre la paroi intérieure (9), qui bloque le mouvement de la première structure de tube (7) sur la formation de boucle (2) dans un sens vers le bas jusqu'au poids (4) afin de fixer la première structure de tube (7) en position.

5. Moyen d'accouplement selon la revendication 4, **caractérisé en ce que** l'extrémité inférieure (17) du « U » comprend le corps (16), dont l'étendue jusqu'à au moins une certaine partie pénètre dans la première ouverture (18) de la première structure de tube (7) au niveau de la seconde extrémité (12) et ferme celle-ci pendant le mouvement de la première structure de tube (7) dans un sens s'éloignant du poids (4) sur la seconde extrémité (12), de sorte que le corps (16) amène la ligne de pêche (5) dans la première structure de tube (7) pour être serrée contre la paroi intérieure (9) pour créer ledit moyen de maintien (3).

6. Moyen d'accouplement selon la revendication 5, **caractérisé en ce que** le corps (16) a une conception en forme de cône avec une section mince (24) en forme de cylindre et une section plus épaisse (25) en forme de cylindre, ladite section mince (24) en forme de cylindre est tournée plus près de la première ouverture (18) au niveau de l'autre extrémité (12), plus ledit corps (16) est entraîné loin dans la première ouverture (18) par la ligne de pêche (5) plus la pression provoquée contre ce dernier est élevée et plus le fil serré entre le corps (16) et la paroi intérieure (9) est rigide.

7. Moyen d'accouplement selon la revendication 6, **caractérisé en ce que** la connexion de la première extrémité (11) au poids (4) est constituée par une articulation mobile pouvant être tournée (19).

8. Moyen d'accouplement selon la revendication 7, **caractérisé en ce que** l'articulation (19) comprend une boucle plus petite (20) et **en ce que** la première extrémité (11) a une formation de crochet (21), qui peut être reliée à la boucle plus petite (20) et est après cela entourée par la seconde structure de tube (14).

9. Moyen d'accouplement selon la revendication 8, **caractérisé en ce que** le fil (10) a une courbure (22) à une position prédéterminée quand le premier tube (7) est poussé vers le bas vers la formation de boucle (2) vers le poids (4) pendant l'exposition de l'ouverture (8) en même temps que la première structure de tube (7) est exposée pour friction contre la paroi intérieure (9) par la courbure (22) et celle-ci est davantage déplacée de manière coulissante par friction, de sorte que l'ouverture (8) est exposée pour l'attachement du poids (4) sur la ligne de pêche (5).
